# FASCICULE DE BREVET EUROPEEN

(11) **EP 1 179 457 B1**
(45) Date de publication et mention de la délivrance du brevet: **24.11.2004**
(21) Numéro de dépôt: 01401923.6
(22) Date de dépôt: 18.07.2001
(51) Int. Cl.: B60R 21/20, F16B 21/18

(54) **Elément de volant de direction de véhicule avec système d'encliquetage, et volant le comportant**
Fahrzeuglenkradelement mit Schnappsystem und dieses enthaltendes Lenkrad
Vehicle steering wheel element with snap-in system and steering wheel comprising it

(30) Priorité: 02.08.2000 FR 0010202
(43) Date de publication de la demande: 13.02.2002
(60) Demande divisionnaire: 04022947.8
(73) Titulaire: AUTOLIV DEVELOPMENT AB, SE-107 24 Stockholm (SE)
(72) Inventeur: Doursoux, Hughes, 86170 Le Rochereau (FR)
(74) Mandataire: Santarelli

(56) Documents cités:
- EP-A- 0 549 856
- DE-C- 19 725 684
- FR-A- 2 790 044
- US-A- 5 380 037

## Description

L'invention a trait aux volants de direction de véhicules.

Elle vise à permettre d'assembler, de façon amovible, deux éléments d'un tel volant, par encliquetage.

On connaît par le brevet allemand DE-C1-197 25 684 un volant de direction, selon le préambule de la revendication 1, auquel est fixé un module air bag (coussin gonflable de sécurité) par encliquetage, au moyen d'un anneau élastique monté sur le module air bag et coopérant avec des crochets solidaires des branches du volant.

L'assemblage des deux éléments s'effectue en faisant pénétrer le module air bag entre les branches du volant, l'anneau élastique étant progressivement resserré par la surface inclinée que comporte chaque crochet, le retour élastique de l'anneau entraînant ensuite celui-ci vers une surface de blocage en translation du crochet situé du côté opposé à celui de la surface inclinée.

Pour démonter le module air bag, il faut introduire un outil dans une ouverture à l'arrière du volant (côté moyeu, parallèlement à l'axe du volant). Il faut ensuite agir sur l'anneau élastique, transversalement à la direction d'introduction, pour dégager celui-ci de la surface de blocage en translation.

D'autres mécanismes de montage d'un module airbag sur une structure de support d'un volant de direction sont décrits dans les documents US-A-5 380 037 et EP-A-1 167 132. Ce dernier document qui fait partie de l'état de la technique tel que défini à l'article 54(3) CBE propose, à cet effet, d'utiliser un élément de retenue en matière plastique monté sur le moyeu du volant.

L'invention vise à permettre d'assembler, de façon amovible, deux éléments d'un volant, par encliquetage, d'une façon qui soit simple et commode, tant au montage qu'au démontage.
Elle propose à cet effet, un élément de volant de direction de véhicule, selon la revendication 1.

Grâce à ces dispositions, tant le montage que le démontage peuvent être effectués de manière simple et commode.

En effet, l'assemblage de deux éléments s'effectue classiquement par encliquetage des pieds d'encliquetage avec la tige élastique.

En outre, pour démonter le deuxième élément, il suffit de déformer globalement la tige élastique par simple entraînement en translation de sa branche centrale, transversalement à l'axe du volant de direction. Le déplacement des branches latérales qui en résulte dégage chacune de celles-ci du ou des pieds d'encliquetage correspondants, ce qui rend possible l'extraction du deuxième élément.

Ainsi, il suffit d'une seule manoeuvre (entraînement de la branche centrale de la tige élastique) pour libérer les pieds d'encliquetage.

De plus, il est possible de déplacer les branches latérales par déformation de la tige élastique sur une distance plus que suffisante pour dégager ces branches latérales des pieds d'encliquetage. Il en résulte une libération franche du deuxième élément.

Selon des caractéristiques préférées, notamment pour permettre un déplacement en translation accru des deux éléments l'un par rapport à l'autre, l'élément de volant de direction comporte au moins deux orifices de réception. Pour les deux ou plus de deux pieds d'encliquetage du deuxième élément, dans lesquels les branches latérales maintiennent les pieds d'encliquetage lorsqu'ils y ont été enfoncés.

De préférence, pour des raisons d'économie, de commodité de réalisation et/ou de commodité de réalisation :
- l'élément de volant de direction comporte des moyens de maintien de la tige élastique munis de moyens pour guider chacune des branches de la tige suivant un trajet prédéterminé ;
- chaque surface de butée est formée sur un moyen de maintien ;
- les moyens de maintien comportent des crochets, les surfaces de butée étant, le cas échéant, formées par les surfaces des montants des crochets tournées vers les branches latérales de la tige élastique ;
- l'élément de volant de direction comporte deux butées de fin de course agencées sur l'élément de volant de direction de manière à pouvoir coopérer chacune avec une extrémité libre d'une branche latérale de la tige élastique pour arrêter un pivotement de la tige élastique dans son plan de déplacement en translation et la redresser ;
- l'élément de volant de direction comporte une branche centrale comportant un tronçon médian en forme de U pour recevoir un outil destiné à appliquer le mouvement de translation à la branche centrale ;
- l'élément de volant de direction comporte deux tronçons de raccordement du tronçon médian en forme de U à chacune des branches latérales, qui sont adaptés chacun à s'encliqueter avec un pied d'encliquetage du deuxième élément, l'application d'un mouvement de translation au tronçon médian en forme de U entraînant les tronçons de raccordement en translation afin de les dégager de leurs pieds d'encliquetage.

L'invention vise également, sous un deuxième aspect, un volant de direction de véhicule, caractérisé en ce qu'il comporte un élément tel qu'exposé ci-dessus ainsi qu'un deuxième élément muni des pieds d'encliquetage.

Selon d'autres caractéristiques préférées :
- le deuxième élément est adapté, une fois encliqueté, à être mobile suivant la direction d'assemblage des deux éléments, entre deux positions extrêmes pré-fixées ;
- le volant comporte des moyens élastiques pour solliciter le deuxième élément vers une première desdites positions extrêmes ;
- le volant comporte des moyens de contact électrique pour commander un accessoire du véhicule, tel que l'avertisseur ;
- ledit élément est l'armature et ledit deuxième élément un module central de sécurité contre les chocs ;
- ledit élément est l'armature et ledit deuxième élément est un module airbag.

L'exposé de l'invention sera maintenant poursuivi par la description détaillée de quelques exemples de réalisation, donnés ci-après à titre illustratif non limitatif, en référence aux dessins annexés. Sur ceux ci :
- la figure 1 est une vue en perspective montrant un module air bag monté par encliquetage sur la partie centrale de l'armature d'un volant à quatre branches ;
- la figure 2 est une vue en perspective montrant le dessous du carter de ce module airbag ;
- la figure 3 est une vue en perspective montrant la partie centrale de l'armature du volant, dans une position où le module est prêt à être encliqueté sur l'armature ;
- la figure 4 est une vue similaire à celle de la figure 3, montrant comment se déforme une tige élastique à configuration générale en U que comporte l'armature, lorsqu'on lui applique un mouvement de translation au moyen d'un outil également montré sur cette figure ;
- la figure 5 est une vue en perspective montrant la partie centrale de l'armature d'un volant à trois branches, dans une position où le module airbag est prêt à être encliqueté sur l'armature ;
- la figure 6 est une vue en perspective de cette même partie centrale d'armature après application d'un mouvement de translation à la tige élastique au moyen d'un outil également montré sur cette figure ;
- la figure 7 est une vue en plan de la portion d'armature des figures 5 et 6, montrant en trait plein et en trait interrompu respectivement les positions de la tige élastique telles qu'illustrées sur les figures 5 et 6 ; et
- la figure 8 est une vue en plan d'une partie centrale d'armature de volant suivant une variante de réalisation, montrant en trait plein et en trait interrompu, les positions extrêmes occupées par la tige élastique que comporte cette partie centrale d'armature.

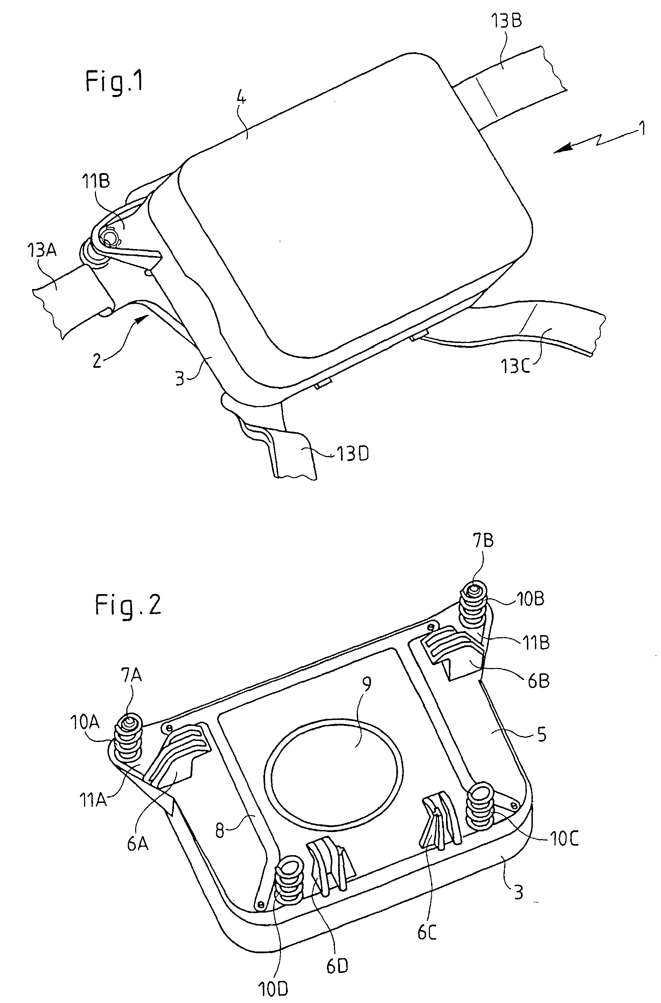

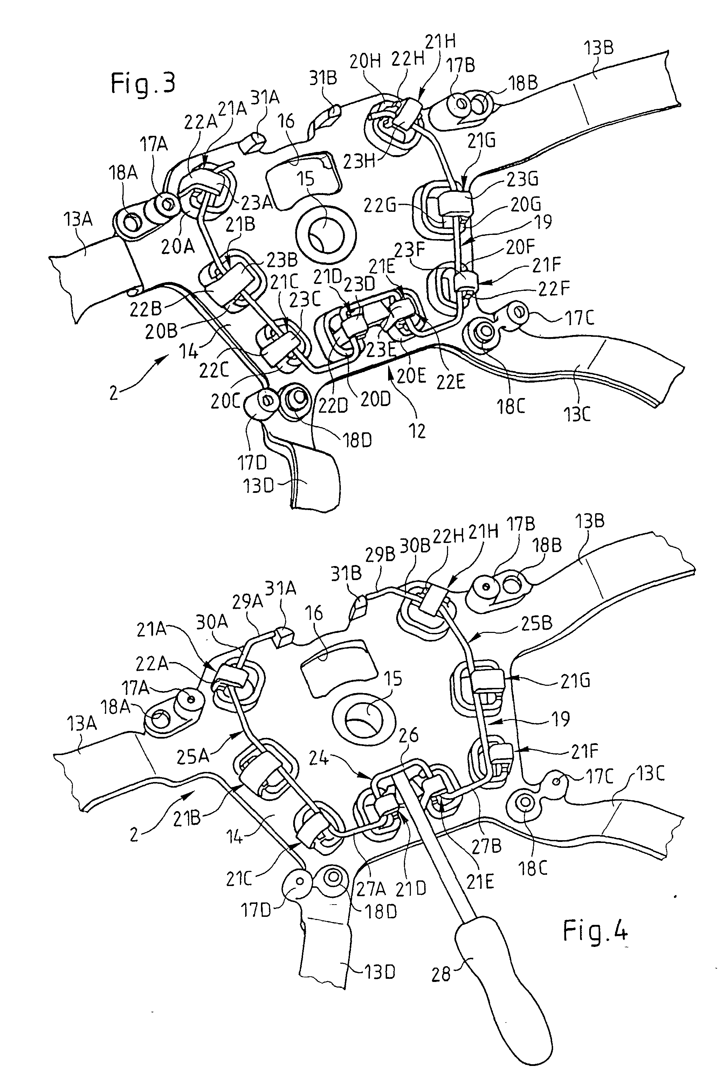

Le volant de direction de véhicule 1 illustré sur la figure 1 comporte une armature métallique 2, ici en alliage moulé, dont la partie centrale est montrée sur les figures 3 et 4.

Il comporte également un module airbag monté sur l'armature métallique 2 par encliquetage et comportant un carter 3 et un couvercle 4 dans lesquels est logé un coussin gonflable.

Ce carter 3, qui est en matière plastique moulée, a une forme de cuvette globalement rectangulaire et comporte un fond 5 de la sous-face duquel font saillie quatre pieds d'encliquetage 6A à 6D, deux tétons 7A et 7 B, une piste en matériau électriquement conducteur 8 et une partie d'un générateur de gaz 9

Quatre ressorts 10A à 10D sont disposés selon les grands côtés du carter 3. Plus précisément, les ressorts 10A et 10B entourent les tétons 7A et 7B en saillie sur des oreilles 11A et 11B du carter 3, tandis que les ressorts 10C et 10D sont disposés selon le grand côté opposé, à proximité des coins respectifs du carter 3.

Les pieds d'encliquetage 6A-6D sont en forme de crochets. Deux d'entre eux, repérés 6A et 6B, se font face sur des petits côtés opposés du carter 3 et à côté des oreilles 11A et 11B, c'est-à-dire au voisinage de l'extrémité du petit côté correspondant. Les deux autres pieds d'encliquetage, repérés 6C et 6D, sont disposés entre les ressorts 10C et 10D, de part et d'autre du milieu du grand côté correspondant et sont tournés vers l'intérieur du carter 3.

La piste 8 conductrice présente une configuration lui permettant de venir en contact, avec des têtes de contact électriques qui seront décrites plus en détail infra (engagement de plots aux extrémités de la piste 8 dans des trous des têtes de contact).

L'armature 2 comporte un moyeu 12 et quatre branches 13A à 13D montrées partiellement, dont une extrémité se raccorde au moyeu 12, tandis que l'autre extrémité des branches se raccorde à une jante (non représentée).

Le moyeu 12 comporte une embase 14 globalement plane et de forme globalement trapézoïdale. Cette embase 14 présente un orifice central 15 prévu pour s'engager sur le bout d'une colonne de direction présentant classiquement des cannelures orientées axialement, une surface de butée pour arrêter l'enfoncement de l'embase 14 sur la colonne, un filetage ou un taraudage pour un écrou ou une vis d'immobilisation prévu pour porter sur la face supérieure de l'embase 14, c'est à dire sur la face plate visible sur les figures 3 et 4.

Il est par ailleurs prévu une ouverture oblongue16 à côté de l'orifice central 15, pour le passage des moyens de connexion électrique.

Quatre bossages sont disposés à la jonction de l'embase 14 avec les branches 13A-13D. Ils comportent chacun une colonne formant une tête de contact électrique 17A-17D destinée à venir au contact de la piste conductrice 8.

Dans les parties de bossages attenantes aux têtes 17A et 17B sont ménagés des orifices 18A et 18 B, orientés parallèlement à l'orifice 15 et présentant un diamètre correspondant à celui des tétons 7A et 7B, les ressorts 10A et 10B venant buter sur la surface supérieure entourant chaque orifice 18A, 18B, une fois le module airbag monté sur l'armature.

Les parties de bossage 18C et 18D attenantes aux colonnes 17C et 17D permettent de positionner les ressorts 10C et 10D lors du montage du module airbag sur l'armature 2.

Conformément à l'invention, une tige d'acier élastique 19, du genre corde à piano, ayant une configuration générale en U, est montée sur l'embase 14 de manière à pouvoir coopérer avec les pieds d'encliquetage 6A-6D du module airbag afin que ce dernier puisse s'encliqueter, de façon amovible, avec l'armature métallique 2 du volant de direction du véhicule 1.

A cet effet, la tige élastique 19 est portée par la tranche de reliefs ou protubérances annulaires débouchants 20 A-20H. Des crochets de retenue 21A-21H comportent chacun un montant vertical 22A-22H monobloc avec un relief annulaire 20A-20H respectif et une traverse 23A-23H placée sensiblement en équerre pour maintenir la tige élastique 19 en appui sur la tranche correspondante du relief annulaire 20A-20H.

La tige élastique 19, quant à elle, comporte une branche centrale 24 et deux branches latérales 25A et 25B (voir figure 4). Cette branche centrale 24 est formée par un tronçon médian 26 conformé en U et deux tronçons de raccordement 27A et 27B du tronçon central 26 à chacune des branches latérales 25A et 25B.

Le tronçon médian 26 est conformé en U pour recevoir un outil 28 destiné à appliquer un mouvement de translation à la branche centrale 24, de manière à provoquer une déformation de la tige élastique 19 permettant de dégager les branches latérales 25A et 25B des pieds d'encliquetage 6A et 6B pour retirer le module airbag de l'armature 2.

La configuration de chacune des branches 25A et 25B est telle qu'elles s'éloignent d'abord l'une de l'autre en partant des tronçons de raccordement respectifs 27A et 27B, puis se rapprochent l'une de l'autre au voisinage de leur extrémité libre.

On observera, à cet égard, que chaque branche latérale 25A et 25B comporte un tronçon d'extrémité 29A et 29B, respectivement, se terminant par l'extrémité libre de la branche et s'étendant pratiquement parallèlement aux tronçons de raccordement 27A et 27B de la branche centrale 24.

Chacun de ces tronçons 29A et 29B est, par ailleurs, précédé par un tronçon en biais 30A et 30B dont l'obliquité par rapport à la perpendiculaire au tronçon de raccordement 27A et 27B est relativement prononcée.

Comme on le verra plus en détail ci-après, les tronçons en biais 30A et 30B entrent chacun en contact avec un montant vertical 22A et 22H de crochet de retenue adjacent, qui est agencé sur l'embase 14 de manière à provoquer une déformation de la tige élastique 19 lors de l'application d'un mouvement de translation à la branche centrale 24 de celle-ci.

Par ailleurs, deux butées 31A et 31B font saillie de l'embase du côté des extrémités libres des branches latérales 25A et 25B, de manière à pouvoir coopérer chacune avec l'une de ces extrémités libres pour arrêter un pivotement de la tige élastique 19 dans son plan de déplacement en translation et la redresser.

Pour assembler le module airbag sur l'armature 2, on place ce module en face de l'armature 2 de telle sorte que les pieds d'encliquetage 6A à 6D reposent sur la tige élastique 19, et plus précisément sur le tronçon compris entre les traverses 23G et 23H pour le pied 6A, le tronçon compris entre les traverses 23A et 23B pour le pied 6B, le tronçon 27A pour le pied 6C et le tronçon 27B pour le pied 6D.

Puis, par une poussée supplémentaire sur le module airbag, les deux premiers de ces tronçons sont déplacés l'un en direction de l'autre (rapprochement des branches 25A et 25B) et les tronçons 27A et 27B sont amenés en translation vers l'intérieur de l'embase 14 par les pieds d'encliquetage 6A à 6D chanfreinés à cet effet.

Lorsque cette portion inclinée des pieds 6A à 6D est franchie, le retour élastique des branches latérales 25A et 25B fait que les tronçons précités viennent se loger dans la partie formant crochet des pieds d'encliquetage 6A à 6D, ce qui assujetti le module airbag à l'armature 2 du volant de direction 1.

Lors de cette opération d'encliquetage, les ressorts 10A à 10D se mettent en place comme indiqué supra et maintiennent le fond 5 du module airbag à une certaine distance de l'armature 2, dans une première position extrême pré-fixée.

Ainsi, après assemblage du module airbag sur l'armature 2 du volant 1, il est possible d'enfoncer ce module à l'encontre des ressorts 10A à 10D jusqu'à ce que la piste 8 vienne en contact avec une ou plusieurs des têtes de contact 17A à 17D. En même temps, les tétons 7A et 7B pénètrent dans les orifices 18A et 18B. Bien entendu, dans d'autres modes de réalisation, la longueur des tétons 7A et 7B peut être choisie de telle manière que ces derniers pénètrent déjà dans les orifices 18A et 18B lors de l'assemblage du module airbag et de l'armature du volant.

Du fait que chacune des têtes de contact est à la masse électrique du véhicule, l'entrée en contact de celle-ci avec la piste électriquement conductrice 8 correspond à la fermeture d'un interrupteur pour un accessoire, tel que l'avertisseur du véhicule connecté à la piste 8, l'enfoncement du module airbag par rapport à l'armature 2 servant ainsi à commander cet accessoire.

Pour retirer le module airbag de l'armature 2, il suffit d'agir sur la tige élastique 19 au moyen de l'outil 28, comme montré sur la figure 4. Ainsi, lorsque l'on pousse la tige élastique 19 à l'aide de cette tige 28, elle est déformée, car les montants 22A et 22H coopérant avec les tronçons en biais 30A et 30B obligent cette tige a se resserrer (rapprochement des branches latérales 25A et 25B), tandis que la branche centrale 24 est déplacée en translation et guidée latéralement par les montants 22D et 22 E des crochets 21 D et 21 E. On notera, à cet égard, qu'au début de l'opération d'assemblage, les branches latérales 25A et 25B sont, ici guidées latéralement par les montants 22B, 22C, 22F et 22G.

La poussée sur la tige élastique 19 permet de dégager celle-ci des pieds d'encliquetage 6C et 6D, tandis que la déformation de cette tige (rapprochement des branches latérales 25A et 25B) permet de dégager celle-ci des deux autres pieds d'encliquetage 6A et 6B.

Comme indiqué supra, on trouve également, sur l'armature 2, des butées 31A à 31B dont le rôle est d'empêcher la tige élastique 19 de pivoter sous l'action de l'outil de déverrouillage 28. En effet, si la tige élastique 19 pivote, on ne peut déverrouiller qu'un côté du module airbag par rapport au point de poussé de l'outil. Grâce à ces butées 31A et 31B, si la tige élastique 19 pivote, elle est arrêtée avant de trop pivoter. En outre, la tige étant alors en appui sur l'une des deux butées, elle va non seulement arrêter de pivoter, mais également se redresser, pour permettre le déverrouillage complet.

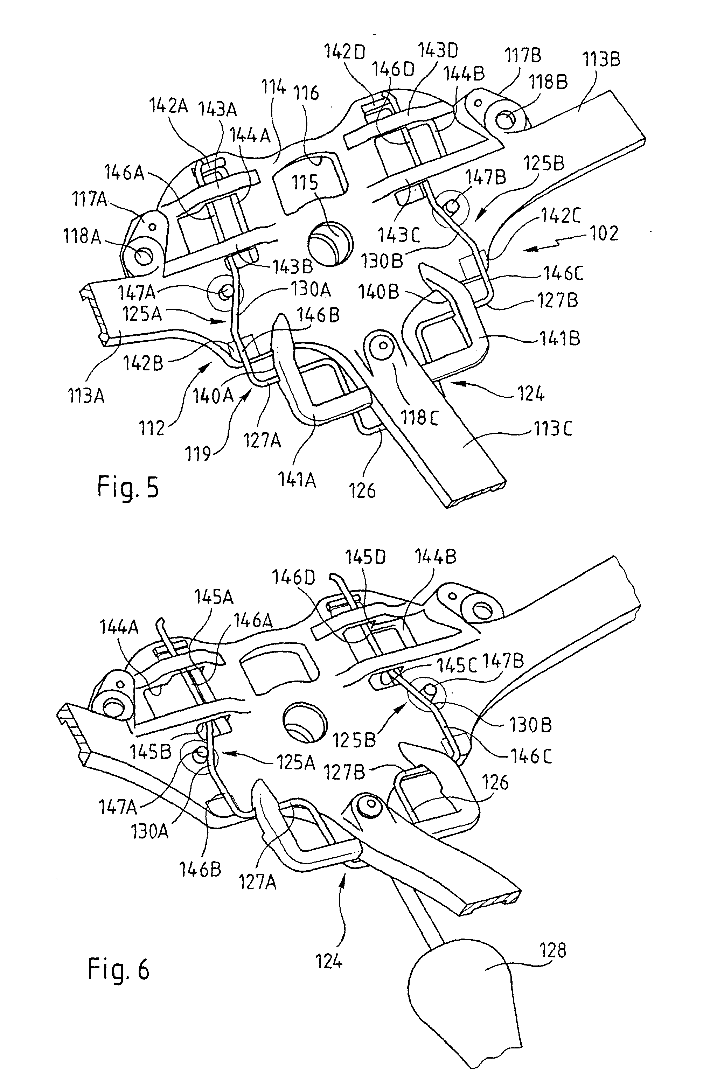

Dans la variante des figures 5 à 7, l'armature de volant 102 est à trois branches 113A, 113B et 113C, tandis que le module airbag est similaire à celui des figures 1 et 2.

Le moyeu 112 comporte, ici aussi, une embase 114 avec un orifice central 115 prévu pour s'engager sur le bout d'une colonne de direction et une ouverture oblongue 116 à côté de cet orifice central 115.

Il n'est plus prévu que trois bossages. Deux d'entre eux comportent des orifices 118A et 118B de réception de tétons du module airbag et forment deux têtes de contact électriques 117A et 117B, tandis que le troisième bossage 118C fait saillie de la branche 113C et permet de positionner un des trois ressorts du module airbag.

La tige élastique 119 de cette variante comporte egalement, suivant une configuration générale en U, une branche centrale 124 et deux branches latérales 125A et 125B. Cette branche centrale 124 comporte, comme pour le mode de réalisation des figures 1 à 4, un tronçon médian en forme de U 126 pour recevoir un outil 128 (voir figure 6) et deux tronçons de raccordement 127A et 127B de ce tronçon médian 126 aux branches latérales 125A et 125B. Ce tronçon médian 126 ne se trouve cependant plus entre les branches latérales 125A et 125B, mais forme un prolongement de la tige élastique 119 dans un sens opposé à celui suivant lequel s'étendent les branches latérales 125A et 125B.

Les tronçons de raccordement 127 A et 127B de cette branche centrale 126 sont, par ailleurs, guidés en translation par deux encoches 140A et 140B ménagées chacune dans une barre 141A et 141B s'étendant entre l'embase 114 et la branche 113C en formant un angle droit.

De leur côté, les branches latérales 125A et 125B reposent sur quatre platines 142A à 142B et sont retenues sur l'embase 114 par deux paires de pontets parallèles 143A à 143D enjambant chacune un orifice 144A et 144B de réception d'un pied d'encliquetage du module airbag.

Comme on le voit le mieux sur la figure 6, des encoches 145A à 145D sont également ménagées dans les pontets 143A à 143D pour guider les branches latérales 125A et 125B lors de la déformation de la tige élastique 119.

A cet effet, ces branches latérales 125A et 125B comportent chacune un tronçon en biais 130A et 130B entre deux tronçons rectilignes s'étendant sensiblement perpendiculairement aux tronçons de raccordement 127A et 127B et portant les repères numériques 146A et 146B pour la branche latérale 125A et les repères numériques 146C et 146D pour la branche latérale 125B.

Pour provoquer la déformation de la tige élastique 19 lors de l'application d'un mouvement de translation à sa branche centrale 124, deux butées cylindriques 147A et 147B font saillie de l'embase 114 à côté des tronçons en biais 130A et 130B avec lesquels elles entrent en contact.

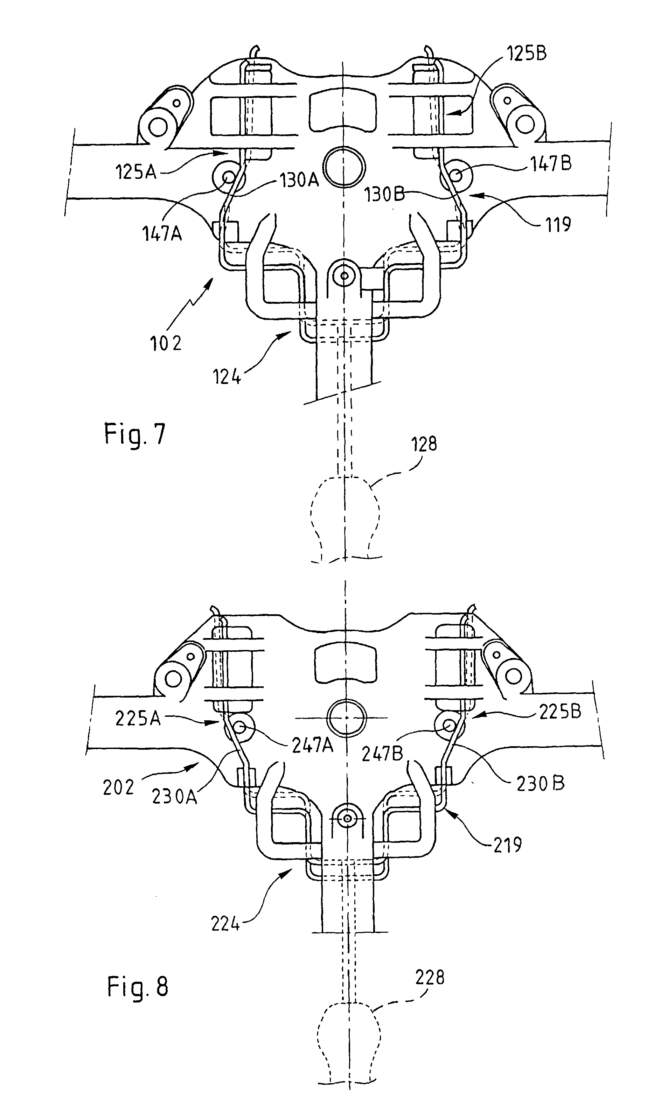

Ainsi, comme on peut le voir sur la figure 7, l'application d'un mouvement de translation à la branche centrale 124 au moyen d'un outil 128 provoque une déformation de la tige élastique 119 par rapprochement des branches latérales 125A et 125B résultant de la coopération des tronçons en biais 130A et 130B et des butées 147A et 147B.

Du point de vu fonctionnel, cette variante est donc similaire au mode de réalisation des figures 1 à 4. Elle en diffère simplement par l'absence de butées de limitation de pivotement et la présence des orifices de réception 144A et 144B pour les pieds d'encliquetage du module airbag, ce qui permet d'augmenter le débattement du module airbag suivant la direction axiale de l'orifice 115 entre les deux positions extrêmes pré-fixées.

Il est à noter à cet égard, qu'aucune structure n'interfère avec ce débattement au niveau des deux autres pieds d'encliquetage qui viennent s'encliqueter avec les tronçons de raccordement 127A et 127B.

Une autre variante est représentée sur la figure 8. Elle diffère de celle des figures 5 à 7 par le fait que les butées cylindriques 247A et 247B sont placées entre les branches latérales 225A et 225B de la tige élastique 219 montée sur l'armature 202. Ainsi, lors de l'application d'un mouvement de translation à la branche centrale 224 de la tige élastique 219 au moyen d'un outil 228, la coopération des butées cylindriques 247A et 247B avec les tronçons en biais 230A et 230B des branches latérales 225A et 225B, obligent ces dernières à s'éloigner l'une de l'autre et non plus à se rapprocher l'une de l'autre.

De ce fait, les deux pieds d'encliquetage du module airbag destiné à s'encliqueter avec ces branches latérales 225A et 225B sont tournés vers l'extérieur du module.

Pour le reste, les opérations d'assemblage et de désassemblage sont similaires à celles décrites pour le mode de réalisation des figures 1 à 4.

Dans une autre variante non illustrée, pour laquelle on ne désire pas commander électriquement un accessoire du véhicule, l'assemblage de l'armature de volant et du module airbag se fait sans mobilité l'un par rapport à l'autre.

Par ailleurs, le module airbag peut également être remplacé par un autre module de sécurité, notamment un module choc-tête ; les pieds d'encliquetage peuvent être prévus sur l'armature du volant tandis que la tige élastique et les surfaces de butée de déformation sont prévues sur le module airbag ou un autre module de sécurité ; et/ou le système d'encliquetage qui vient d'être décrit sert à assembler d'autres éléments d'un volant que l'armature et un module de sécurité.

De nombreuses autres variantes sont possibles en fonction des circonstances, et on rappellera à cet égard que l'invention ne se limite pas aux exemples décrits et représentés.

## Revendications (Revendications pour l'(les) Etat(s) contractant(s) suivant(s): AT, BE, CH, CY, DK, ES, FI, GR, IE, IT, LU, MC, NL, PT, SE, TR, LI)

1. Elément (2; 102; 202) de volant de direction de véhicule, comportant, pour s'encliqueter de façon amovible avec un deuxième élément (3, 4), une tige élastique (19 ; 119 ; 219) adaptée à coopérer avec au moins deux pieds d'encliquetage (6A-6D) du deuxième élément (3, 4), **caractérisé en ce que** la tige (19 ; 119 ; 219) comporte, suivant une configuration générale en U, une branche centrale (24 ; 124 ; 224) susceptible d'être entraînée en translation et deux branches latérales (25A, 25B ; 125A, 125B; 225A, 225B) adaptées à s'encliqueter chacune avec au moins un pied d'encliquetage (6A-6D), chaque branche latérale (25A, 25B ; 125A, 125B ; 225A, 225B) comporte un tronçon en biais (30A, 30B ; 130A, 130B ; 230A, 230B) à une distance prédéterminée de la branche centrale (24 ; 124 ; 224), par lequel elle entre en contact avec une surface de butée adjacente (22A, 22H ; 147A, 147B ; 247A, 247B), agencée sur l'élément de volant de direction (2 ; 102 ; 202) de manière à provoquer une déformation de la tige élastique (19 ; 119 ; 219) lors de l'application d'un mouvement de translation à la branche centrale (24 ; 124 ; 224) de celle-ci, permettant de dégager les branches latérales (25A, 25B ; 125A, 125B ; 225A ; 225B) des pieds d'encliquetage (6A, 6D) respectifs pour retirer le deuxième élément (3, 4) de l'élément (2 ; 102 ; 202) de volant de direction.

2. Elément de volant selon la revendication 1, **caractérisé en ce qu'**il comporte au moins deux orifices de réception (144A, 144B) pour les deux ou plus de deux pieds d'encliquetage du deuxième élément, dans lesquels les branches latérales (125A, 125B) maintiennent les pieds d'encliquetage lorsqu'ils y ont été enfoncés.

3. Elément selon la revendication 1 ou 2, **caractérisé en ce qu'**il comporte des moyens de maintien (20A-20H, 21A-21 H) de la tige élastique munis de moyens (22A-22H) pour guider chacune des branches de la tige suivant un trajet prédéterminé.

4. Elément selon la revendication 3, **caractérisé en ce que** chaque surface de butée est formée sur un moyen de maintien.

5. Elément selon la revendication 3 ou 4, **caractérisé en ce que** les moyens de maintien comportent des crochets (21A-21H), les surfaces de butée étant, le cas échéant, formées par les surfaces des montants (22A-22H) des crochets tournées vers les branches latérales (25A, 25B ; 125A, 125B ; 225A, 225B) de la tige élastique.

6. Elément selon l'une quelconque des revendications 1 à 5, **caractérisé en ce qu'**il comporte deux butées (31A, 31B) de fin de course agencées sur l'élément de volant de direction de manière à pouvoir coopérer chacune avec une extrémité libre d'une branche latérale (25A, 25B) de la tige élastique pour arrêter un pivotement de la tige élastique (19) dans son plan de déplacement en translation et la redresser.

7. Elément selon l'une quelconque des revendications 1 à 6, **caractérisé en ce que** la branche centrale comporte un tronçon médian (26 ; 126) en forme de U pour recevoir un outil destiné à appliquer le mouvement de translation à la branche centrale.

8. Elément selon la revendication 7, **caractérisé en ce qu'**il comporte deux tronçons de raccordement (27A, 27B) du tronçon médian en forme de U à chacune des branches latérales, qui sont adaptés chacun à s'encliqueter avec un pied d'encliquetage (6C, 6D) du deuxième élément, l'application d'un mouvement de translation au tronçon médian (26) en forme de U entraînant les tronçons de raccordement en translation afin de les dégager de leurs pieds d'encliquetage respectifs.

9. Volant de direction, **caractérisé en ce qu'**il comporte un élément (2; 102; 202) selon l'une quelconque des revendications 1 à 8, ainsi qu'un deuxième élément (3 ; 4) muni des pieds d'encliquetage (6A-6D).

10. Volant de direction selon la revendications 9, **caractérisé en ce que** le deuxième élément est adapté, une fois encliqueté, à être mobile suivant la direction d'assemblage des deux éléments, entre deux positions extrêmes pré-fixées.

11. Volant selon la revendication 10, **caractérisé en ce qu'**il comporte des moyens élastiques (10A - 10D) pour solliciter le deuxième élément vers une première desdites positions extrêmes.

12. Volant selon l'une quelconque des revendications 9 à 11, **caractérisé en ce qu'**il comporte des moyens de contact électrique (8, 17A - 17D) pour commander un accessoire du véhicule, tel que l'avertisseur.

13. Volant selon l'une quelconque des revendications 9 à 12, **caractérisé en ce que** ledit élément est l'armature (2 ; 102 ; 202) et ledit deuxième élément un module central de sécurité contre les chocs.

14. Volant selon quelconque des revendications 9 à 12, **caractérisé en ce que** ledit élément est l'armature (2 ; 102 ; 202), et ledit deuxième élément un module airbag (3, 4).

## Revendications (Revendications pour l'(les) Etat(s) contractant(s) suivant(s): DE, FR, GB)

1. Elément (2 ; 102 ; 202) de volant de direction de véhicule, du genre comportant une armature comportant un moyeu, une jante et plusieurs branches qui se raccordent par l'une de leurs extrémités au moyeu et par l'autre extrémité à la jante et, pour s'encliqueter de façon amovible avec un deuxième élément (3, 4), une tige élastique (19 ; 119 ; 219) adaptée à coopérer avec au moins deux pieds d'encliquetage (6A-6D) du deuxième élément (3, 4), **caractérisé en ce que** la tige (19 ; 119 ; 219) comporte, suivant une configuration générale en U, une branche centrale (24; 124 ; 224) susceptible d'être entraînée en translation et deux branches latérales (25A, 25B; 125A, 125B; 225A, 225B) adaptées à s'encliqueter chacune avec au moins un pied d'encliquetage (6A-6D), chaque branche latérale (25A, 25B; 125A, 125B ; 225A, 225B) comporte un tronçon en biais (30A, 30B; 130A, 130B; 230A, 230B) à une distance prédéterminée de la branche centrale (24; 124 ; 224), par lequel elle entre en contact avec une surface de butée adjacente (22A, 22H ; 147A, 147B; 247A, 247B), agencée sur l'élément de volant de direction (2; 102 ; 202) de manière à provoquer une déformation de la tige élastique (19; 119; 219) lors de l'application d'un mouvement de translation à la branche centrale (24 ; 124 ; 224) de celle-ci, permettant de dégager les branches latérales (25A, 25B; 125A, 125B ; 225A ; 225B) des pieds d'encliquetage (6A, 6D) respectifs pour retirer le deuxième élément (3, 4) de l'élément (2 ; 102 ; 202) de volant de direction et **en ce qu'**il comporte des moyens de maintien (20A-20H, 21A-21 H) de la tige élastique munis de moyens (22A-22H) pour guider chacune des branches de la tige suivant un trajet prédéterminé, qui sont d'un seul tenant avec le moyeu de l'armature, en formant par moulage une seule et même pièce avec celui-ci.

2. Elément de volant selon la revendication 1, **caractérisé en ce qu'**il comporte au moins deux orifices de réception (144A, 144B) pour les deux ou plus de deux pieds d'encliquetage du deuxième élément, dans lesquels les branches latérales (125A, 125B) maintiennent les pieds d'encliquetage lorsqu'ils y ont été enfoncés.

3. Elément selon la revendication 1 ou 2, **caractérisé en ce que** chaque surface de butée est formée sur un moyen de maintien.

4. Elément selon l'une quelconque des revendications 1 à 3, **caractérisé en ce que** les moyens de maintien comportent des crochets (21A-21 H), les surfaces de butée étant, le cas échéant, formées par les surfaces des montants (22A-22H) des crochets tournées vers les branches latérales (25A, 25B ; 125A, 125B ; 225A, 225B) de la tige élastique.

5. Elément selon l'une quelconque des revendications 1 à 4, **caractérisé en ce qu'**il comporte deux butées (31A, 31B) de fin de course agencées sur l'élément de volant de direction de manière à pouvoir coopérer chacune avec une extrémité libre d'une branche latérale (25A, 25B) de la tige élastique pour arrêter un pivotement de la tige élastique (19) dans son plan de déplacement en translation et la redresser.

6. Elément selon l'une quelconque des revendications 1 à 5, **caractérisé en ce que** la branche centrale comporte un tronçon médian (26 ; 126) en forme de U pour recevoir un outil destiné à appliquer le mouvement de translation à la branche centrale.

7. Elément selon la revendication 6, **caractérisé en ce qu'**il comporte deux tronçons de raccordement (27A, 27B) du tronçon médian en forme de U à chacune des branches latérales, qui sont adaptés chacun à s'encliqueter avec un pied d'encliquetage (6C, 6D) du deuxième élément, l'application d'un mouvement de translation au tronçon médian (26) en forme de U entraînant les tronçons de raccordement en translation afin de les dégager de leurs pieds d'encliquetage respectifs.

8. Volant de direction, **caractérisé en ce qu'**il comporte un élément (2 ; 102 ; 202) selon l'une quelconque des revendications 1 à 7, ainsi qu'un deuxième élément (3 ; 4) muni des pieds d'encliquetage (6A-6D).

9. Volant de direction selon la revendication 8, **caractérisé en ce que** le deuxième élément est adapté, une fois encliqueté, à être mobile suivant la direction d'assemblage des deux éléments, entre deux positions extrêmes pré-fixées.

10. Volant selon la revendication 9, **caractérisé en ce qu'**il comporte des moyens élastiques (10A - 10D) pour solliciter le deuxième élément vers une première desdites positions extrêmes.

11. Volant selon l'une quelconque des revendications 8 à 10, **caractérisé en ce qu'**il comporte des moyens de contact électrique (8, 17A - 17D) pour commander un accessoire du véhicule, tel que l'avertisseur.

12. Volant selon l'une quelconque des revendications 8 à 11, **caractérisé en ce que** ledit deuxième élément est un module central de sécurité contre les chocs.

13. Volant selon quelconque des revendications 8 à 11, **caractérisé en ce que** ledit deuxième élément est un module airbag (3, 4).

## Patentansprüche (Patentansprüche für folgende(n) Vertragsstaat(en): AT, BE, CH, CY, DK, ES, FI, GR, IE, IT, LU, MC, NL, PT, SE, TR, LI)

1. Element (2; 102; 202) für Fahrzeuglenkrad des Typs, das, um lösbar an einem zweiten Element (3, 4) einzurasten, einen elastischen Stab (19; 119; 219), der so beschaffen ist, dass er mit wenigstens zwei Einrastfüßen (6A-6D) des zweiten Elements (3, 4) zusammenwirkt, umfasst, **dadurch gekennzeichnet, dass** der Stab (19; 119; 219) eine allgemeine U-Konfiguration aufweist und einen Mittelarm (24; 124; 224), der translatorisch mitnehmbar ist, und zwei Seitenarme (25A, 25B; 125A, 125B; 225A, 225B), die jeweils mit wenigstens einem Einrastfuß (6A-6B) einrasten können, umfasst, wobei jeder Seitenarm (25A, 25B; 125A, 125B; 225A, 225B) ein schräges Teilstück (30A, 30B; 130A, 130B; 230A, 230B) in einem vorgegebenen Abstand vom Mittelarm (24; 124; 224) umfasst, durch den er in Kontakt mit einer benachbarten Anschlagoberfläche (22A, 22H; 147A, 147B; 247A, 247B) gelangt, die an dem Lenkradelement (2; 102; 202) angeordnet ist, so dass eine Verformung des elastischen Stabs (19; 119; 219) hervorgerufen wird, wenn auf seinen Mittelarm (24; 124; 224) eine translatorische Bewegung ausgeübt wird, wodurch die Seitenarme (25A, 25B; 125A, 125B; 225A, 225B) von den jeweiligen Einrastfüßen (6A, 6D) gelöst werden, um das zweite Element (3, 4) von dem Lenkradelement (2; 102; 202) zurückzuziehen.

2. Lenkradelement nach Anspruch 1, **dadurch gekennzeichnet, dass** es wenigstens zwei Aufnahmeöffnungen (144A, 144B) für die zwei oder mehreren Einrastfüße des zweiten Elements umfasst, in denen die Seitenarme (125A, 125B) die Einrastfüße halten, wenn sie dort hineingeschoben worden sind.

3. Element nach Anspruch 1 oder 2, **dadurch gekennzeichnet, dass** es Mittel (20A-20H, 21A-21H) zum Halten des elastischen Stabs umfasst, die mit Mitteln (22A-22H) versehen sind, um jeden der Arme des Stabs auf einer vorgegebenen Bahn zu führen.

4. Element nach Anspruch 3, **dadurch gekennzeichnet, dass** jede Anschlagfläche an einem Haltemittel ausgebildet ist.

5. Element nach einem der Ansprüche 3 oder 4, **dadurch gekennzeichnet, dass** die Haltemittel Haken (21A-21H) umfassen, wobei die Anschlagoberflächen gegebenenfalls durch die Stützflächen (22A-22H) der Haken gebildet sind, die zu den Seitenarmen (25A, 25B; 125A, 125B; 225A, 225B) des elastischen Stabs gewendet sind.

6. Element nach einem der Ansprüche 1 bis 5, **dadurch gekennzeichnet, dass** es zwei Bahnendeanschläge (31A, 31B) umfasst, die an dem Lenkradelement in der Weise angeordnet sind, dass sie jeweils mit einem freien Ende eines Seitenarms (25A, 25B) des elastischen Stabs zusammenwirken können, um eine Schwenkung des elastischen Stabs (19) in seiner Ebene der translatorischen Verlagerung anzuhalten und ihn auszurichten.

7. Element nach einem der Ansprüche 1 bis 6, **dadurch gekennzeichnet, dass** der Mittelarm ein mittleres Teilstück (26; 126) in U-Form umfasst, um ein Werkzeug aufzunehmen, das dazu bestimmt ist, auf den Mittelarm die translatorische Bewegung auszuüben.

8. Element nach Anspruch 7, **dadurch gekennzeichnet, dass** es zwei Teilstücke (27A, 27B) zum Verbinden des Mittelteilstücks in U-Form mit jedem der Seitenarme umfasst, die jeweils so beschaffen sind, dass sie mit einem Einrastfuß (6C, 6D) des zweiten Elements einrasten, wobei die Ausübung der translatorischen Bewegung auf das Mittelteilstück (26) in U-Form die Verbindungsteilstücke translatorisch mitnimmt, um sie von ihren jeweiligen Einrastfüßen zu lösen.

9. Lenkrad, **dadurch gekennzeichnet, dass** es ein Element (2; 102; 202) nach einem der Ansprüche 1 bis 8 sowie ein zweites Element (3; 4), das mit Einrastfüßen (6A-6D) versehen ist, umfasst.

10. Lenkrad nach Anspruch 9, **dadurch gekennzeichnet, dass** das zweite Element so beschaffen ist, dass es, sobald es eingerastet ist, in Richtung der Zusammenfügung der beiden Elemente zwischen zwei im Voraus festgelegten Extrempositionen beweglich ist.

11. Lenkrad nach Anspruch 10, **dadurch gekennzeichnet, dass** es elastische Mittel (10A-10D) zum Vorbelasten des zweiten Elements in eine erste der zwei Extrempositionen umfasst.

12. Lenkrad nach einem der Ansprüche 9 bis 11, **dadurch gekennzeichnet, dass** es Mittel (8, 17A-17D) für einen elektrischen Kontakt umfasst, die eine Hilfsvorrichtung des Fahrzeugs wie etwa ein Hupe steuern.

13. Lenkrad nach einem der Ansprüche 9 bis 12, **dadurch gekennzeichnet, dass** das zweite Element ein Sicherheitszentralmodul gegen Stöße ist.

14. Lenkrad nach einem der Ansprüche 9 bis 12, **dadurch gekennzeichnet, dass** das Element der Beschlag (2; 102; 202) ist und das zweite Element ein Airbag-Modul (3, 4) ist.

## Patentansprüche (Patentansprüche für folgende(n) Vertragsstaat(en): DE, FR, GB)

1. Element (2; 102; 202) für Fahrzeuglenkrad des Typs, der einen Beschlag mit einer Nabe, einem Lenkkranz und mehreren Armen, die mit einem ihrer Enden mit der Nabe und mit dem anderen Ende mit dem Lenkkranz verbunden sind, und, um lösbar an einem zweiten Element (3, 4) einzurasten, einen elastischen Stab (19; 119; 219), der so beschaffen ist, dass er mit wenigstens zwei Einrastfüßen (6A-6D) des zweiten Elements (3, 4) zusammenwirkt, umfasst, **dadurch gekennzeichnet, dass** der Stab (19; 119; 219) eine allgemeine U-Konfiguration aufweist und einen Mittelarm (24; 124; 224), der translatorisch mitnehmbar ist, und zwei Seitenarme (25A, 25B; 125A, 125B; 225A, 225B), die jeweils mit wenigstens einem Einrastfuß (6A-6B) einrasten können, umfasst, wobei jeder Seitenarm (25A, 25B; 125A, 125B; 225A, 225B) ein schräges Teilstück (30A, 30B; 130A, 130B; 230A, 230B) in einem vorgegebenen Abstand vom Mittelarm (24; 124; 224) umfasst, durch den er in Kontakt mit einer benachbarten Anschlagoberfläche (22A, 22H; 147A, 147B; 247A, 247B) gelangt, die an dem Lenkradelement (2; 102; 202) angeordnet ist, so dass eine Verformung des elastischen Stabs (19; 119; 219) hervorgerufen wird, wenn auf seinen Mittelarm (24; 124; 224) eine translatorische Bewegung ausgeübt wird, wodurch die Seitenarme (25A, 25B; 125A, 125B; 225A, 225B) von den jeweiligen Einrastfüßen (6A, 6D) gelöst werden, um das zweite Element (3, 4) von dem Lenkradelement (2; 102; 202) zurückzuziehen, und dass es Mittel (20A-20H, 21A-21H) zum Halten des elastischen Stabs umfasst, die mit Mitteln (22A-22H) versehen sind, um jeden der Arme des Stabs auf einer vorgegebenen Bahn zu führen, die einteilig mit der Nabe des Beschlags ausgebildet sind, indem sie mit ihr durch Gießen ein einziges Teil bilden.

2. Lenkradelement nach Anspruch 1, **dadurch gekennzeichnet, dass** es wenigstens zwei Aufnahmeöffnungen (144A, 144B) für die zwei oder mehreren Einrastfüße des zweiten Elements umfasst, in denen die Seitenarme (125A, 125B) die Einrastfüße halten, wenn sie dort hineingeschoben worden sind.

3. Element nach Anspruch 1 oder 2, **dadurch gekennzeichnet, dass** jede Anschlagfläche an einem Haltemittel ausgebildet ist.

4. Element nach einem der Ansprüche 1 bis 3, **dadurch gekennzeichnet, dass** die Haltemittel Haken (21A-21H) umfassen, wobei die Anschlagoberflächen gegebenenfalls durch die Stützflächen (22A-22H) der Haken gebildet sind, die zu den Seitenarmen (25A, 25B; 125A, 125B; 225A, 225B) des elastischen Stabs gewendet sind.

5. Element nach einem der Ansprüche 1 bis 4, **dadurch gekennzeichnet, dass** es zwei Bahnendeanschläge (31A, 31B) umfasst, die an dem Lenkradelement in der Weise angeordnet sind, dass sie jeweils mit einem freien Ende eines Seitenarms (25A, 25B) des elastischen Stabs zusammenwirken können, um eine Schwenkung des elastischen Stabs (19) in seiner Ebene der translatorischen Verlagerung anzuhalten und ihn auszurichten.

6. Element nach einem der Ansprüche 1 bis 5, **dadurch gekennzeichnet, dass** der Mittelarm ein mittleres Teilstück (26; 126) in U-Form umfasst, um ein Werkzeug aufzunehmen, das dazu bestimmt ist, auf den Mittelarm die translatorische Bewegung auszuüben.

7. Element nach Anspruch 6, **dadurch gekennzeichnet, dass** es zwei Teilstücke (27A, 27B) zum Verbinden des Mittelteilstücks in U-Form mit jedem der Seitenarme umfasst, die jeweils so beschaffen sind, dass sie mit einem Einrastfuß (6C, 6D) des zweiten Elements einrasten, wobei die Ausübung der translatorischen Bewegung auf das Mittelteilstück (26) in U-Form die Verbindungsteilstücke translatorisch mitnimmt, um sie von ihren jeweiligen Einrastfüßen zu lösen.

8. Lenkrad, **dadurch gekennzeichnet, dass** es ein Element (2; 102; 202) nach einem der Ansprüche 1 bis 8 sowie ein zweites Element (3; 4), das mit Einrastfüßen (6A-6D) versehen ist, umfasst.

9. Lenkrad nach Anspruch 8, **dadurch gekennzeichnet, dass** das zweite Element so beschaffen ist, dass es, sobald es eingerastet ist, in Richtung der Zusammenfügung der beiden Elemente zwischen zwei im Voraus festgelegten Extrempositionen beweglich ist.

10. Lenkrad nach Anspruch 9, **dadurch gekennzeichnet, dass** es elastische Mittel (10A-10D) zum Vorbelasten des zweiten Elements in eine erste der zwei Extrempositionen umfasst.

11. Lenkrad nach einem der Ansprüche 8 bis 10, **dadurch gekennzeichnet, dass** es Mittel (8, 17A-17D) für einen elektrischen Kontakt umfasst, die eine Hilfsvorrichtung des Fahrzeugs wie etwa ein Hupe steuern.

12. Lenkrad nach einem der Ansprüche 8 bis 11, **dadurch gekennzeichnet, dass** das zweite Element ein Sicherheitszentralmodul gegen Stöße ist.

13. Lenkrad nach einem der Ansprüche 8 bis 11, **dadurch gekennzeichnet, dass** das zweite Element ein Airbag-Modul (3, 4) ist.

## Claims (Claims for the following Contracting State(s): AT, BE, CH, CY, DK, ES, FI, GR, IE, IT, LU, MC, NL, PT, SE, TR, LI)

1. A vehicle steering wheel member (2 ; 102 ; 202) comprising, for removably snap-fitting with a second member (3, 4), an elastic rod (19 ; 119 ; 219) adapted to cooperate with at least two snap feet (6A-6D) of the second member (3, 4), **characterized in that** the rod (19 ; 119 ; 219) comprises, in a U-shaped general configuration, a central branch (24 ; 124 ; 224) able to undergo translational movement and two side branches (25A, 25B; 125A, 125B ; 225A, 225B) each adapted to snap-fit with at least one snap foot (6A-6D), each side branch (25A, 25B ; 125A, 125B ; 225A, 225B) comprises an oblique section (30A, 30B ; 130A, 130B; 230A, 230B) at a predetermined distance from the central branch (24 ; 124 ; 224), by which it enters into contact with an adjacent abutment surface (22A, 22H ; 147A, 147B ; 247A, 247B) provided on the vehicle steering wheel member (2 ; 102 ; 202) so as to give rise to deformation of the elastic rod (19 ; 119 ; 219) on imparting a translational movement to its central branch (24; 124 ; 224), enabling the side branches (25A, 25B ; 125A, 125B ; 225A ; 225B) to be freed from the respective snap feet (6A, 6D) in order to withdraw the second member (3, 4) from the steering wheel member (2 ; 102 ; 202).

2. A steering wheel member according to claim 1, **characterized in that** it comprises at least two apertures (144A, 144B) for receiving the two or more snap feet of the second member, in which the side branches (125A, 125B) hold the snap feet when they have been inserted therein.

3. A member according to claim 1 or 2, **characterized in that** it comprises means (20A-20H, 21A-21 H) for holding the elastic rod provided with means (22A-22H) for guiding each of the branches of the rod in a predetermined path.

4. A member according to claim 3, **characterized in that** each abutment surface is formed on a holding means.

5. A member according to claim 3 or 4, **characterized in that** the holding means comprise hooks (21A-21H), the abutment surfaces being, the case arising, formed by the surfaces of the uprights (22A-22H) of the hooks turned towards the side branches (25A, 25B ; 125A, 125B ; 225A, 225B) of the elastic rod.

6. A member according to any one of claims 1 to 5, **characterized in that** it comprises two end of travel abutments (31A, 31B) arranged on the steering wheel member in order that each can cooperate with a free end of a side branch (25A, 25B) of the elastic rod to stop a pivotal movement of the elastic rod (19) in its plane of translational movement and to right it.

7. A member according to any one of claims 1 to 6, **characterized in that** the central branch comprises a U-shaped medial section (26 ; 126) for receiving a tool adapted to impart the translational movement to the central branch.

8. A member according to claim 7, **characterized in that** it comprises two sections (27A, 27B) for connecting the U-shaped medial section to each of the side branches, which are each adapted to snap-fit with a snap foot (6C, 6D) of the second member, the application of a translational movement to the U-shaped medial section (26) driving the connecting sections in translational movement in order to free them from their respective snap feet.

9. A steering wheel, **characterized in that** it comprises a member (2 ; 102 ; 202) according to any one of claims 1 to 8, as well as a second member (3 ; 4) provided with snap feet (6A-6D).

10. A steering wheel according to claim 9, **characterized in that** the second member is adapted, once snap-fitted, to be movable in the direction of assembly of the two members, between two pre-set extreme positions.

11. A steering wheel according to claim 10, **characterized in that** it comprises elastic means (10A - 10D) for urging the second member towards a first of said extreme positions.

12. A steering wheel according to any one of claims 9 to 11, **characterized in that** it comprises electrical contact means (8, 17A - 17D) for controlling a vehicle accessory, such as a warning device.

13. A steering wheel according to any one of claims 9 to 12, **characterized in that** said member is the frame (2 ; 102 ; 202) and said second member is a central module for collision safety.

14. A steering wheel according to any one of claims 9 to 12, **characterized in that** said member is the frame (2 ; 102 ; 202), and said second member is an airbag module (3, 4).

## Claims (Claims for the following Contracting State(s): DE, FR, GB)

1. A vehicle steering wheel member (2 ; 102 ; 202) of the kind comprising a frame comprising a hub, a rim and several branches which are connected by one of their ends to the hub and by the other end to the rim and, for removably snap-fitting with a second member (3, 4), an elastic rod (19 ; 119 ; 219) adapted to cooperate with at least two snap feet (6A-6D) of the second member (3, 4), **characterized in that** the rod (19 ; 119 ; 219) comprises, in a U-shaped general configuration, a central branch (24 ; 124 ; 224) able to undergo translational movement and two side branches (25A, 25B ; 125A, 125B ; 225A, 225B) each adapted to snap-fit with at least one snap foot (6A-6D), each side branch (25A, 25B ; 125A, 125B ; 225A, 225B) comprises an oblique section (30A, 30B; 130A, 130B; 230A, 230B) at a predetermined distance from the central branch (24 ; 124 ; 224), by which it enters into contact with an adjacent abutment surface (22A, 22H ; 147A, 147B ; 247A, 247B) provided on the vehicle steering wheel member (2 ; 102 ; 202) so as to give rise to deformation of the elastic rod (19 ; 119; 219) on imparting a translational movement to its central branch (24; 124; 224), enabling the side branches (25A, 25B ; 125A, 125B ; 225A; 225B) to be freed from the respective snap feet (6A, 6D) in order to withdraw the second member (3, 4) from the steering wheel member (2 ; 102 ; 202) and **in that** it comprises means (20A-20H, 21A-21 H) for holding the elastic rod provided with means (22A-22H) for guiding each of the branches of the rod in a predetermined path, which are integral with the hub of the frame, being molded as a single part with the latter.

2. A steering wheel member according to claim 1, **characterized in that** it comprises at least two apertures (144A, 144B) for receiving the two or more snap feet of the second member, in which the side branches (125A, 125B) hold the snap feet when they have been inserted therein.

3. A member according to claim 1 or 2, **characterized in that** each abutment surface is formed on a holding means.

4. A member according to any one of claims 1 to 3, **characterized in that** the holding means comprise hooks (21A-21 H), the abutment surfaces being, the case arising, formed by the surfaces of the uprights (22A-22H) of the hooks turned towards the side branches (25A, 25B ; 125A, 125B ; 225A, 225B) of the elastic rod.

5. A member according to any one of claims 1 to 4, **characterized in that** it comprises two end of travel abutments (31A, 31B) arranged on the steering wheel member in order that each can cooperate with a free end of a side branch (25A, 25B) of the elastic rod to stop a pivotal movement of the elastic rod (19) in its plane of translational movement and to right it.

6. A member according to any one of claims 1 to 5, **characterized in that** the central branch comprises a U-shaped medial section (26 ; 126) for receiving a tool adapted to impart the translational movement to the central branch.

7. A member according to claim 6, **characterized in that** it comprises two sections (27A, 27B) for connecting the U-shaped medial section to each of the side branches, which are each adapted to snap-fit with a snap foot (6C, 6D) of the second member, the application of a translational movement to the U-shaped medial section (26) driving the connecting sections in translational movement in order to free them from their respective snap feet.

8. A steering wheel, **characterized in that** it comprises a member (2 ; 102 ; 202) according to any one of claims 1 to 7, as well as a second member (3 ; 4) provided with snap feet (6A-6D).

9. A steering wheel according to claim 8, **characterized in that** the second member is adapted, once snap-fitted, to be movable in the direction of assembly of the two members, between two pre-set extreme positions.

10. A steering wheel according to claim 9, **characterized in that** it comprises elastic means (10A - 10D) for urging the second member towards a first of said extreme positions.

11. A steering wheel according to any one of claims 8 to 10, **characterized in that** it comprises electrical contact means (8, 17A - 17D) for controlling a vehicle accessory, such as a warning device.

12. A steering wheel according to any one of claims 8 to 11, **characterized in that** said second member is a central module for collision safety.

13. A steering wheel according to any one of claims 8 to 11, **characterized in that** said second member is an airbag module (3, 4).
